Europäisches Patentamt

European Patent Office

Office européen des brevets

(19)

(11) Publication number: **0 272 347**
**B1**

(12)

# EUROPEAN PATENT SPECIFICATION

(45) Date of publication of the patent specification:
07.06.89

(21) Application number: 86118068.5

(22) Date of filing: 24.12.86

(51) Int. Cl.⁴: **G01S 7/52, G01S 15/02,**
**G10K 11/34**

ERRATUM

(SEITE, SPALTE, ZEILE)
(PAGE, COLUMN, LINE)
(PAGE, COLONNE, LIGNE)

DIE TEXTSTELLE :
TEXT PUBLISHED :
LE PASSAGE SUIVANT :

LAUTET BERICHTIGT:
SHOULD READ :
DEVRAIT ETRE LU :

| | Seite/Page | Spalte/Column | Zeile/Line | Should read |
|---|---|---|---|---|
| The ♠ output of flipflop | 3 | 4 | 52 | The $\bar{Q}$ output of flipflop |
| the ♠ output signal | 4 | 5 | 10 | the $\bar{Q}$ output signal |
| delays of the impulses, | 5 | 7 | 5 | delays of the pulses, |
| excitation impulses | 5 | 7 | 27 | excitation pulses |
| impulses is approximately | 5 | 7 | 50 | pulses is approximately |

Tag der Entscheidung
über die Berichtigung      )
Date of decision on        )   11.07.89
rectification:             )
Date de décision portant   )

Ausgabe- und Ver-
öffentlichungstag:         )
Issue and publication      )   11.10.89
date:                      )
Date d'edition et de       )
publication:               )

Patbl.Nr)
                              89/41
EPB no:) . . . . . . . .

Bull. no:)

Europäisches Patentamt

(19) European Patent Office

Office européen des brevets

(11) Publication number: **0 272 347 B1**

# EUROPEAN PATENT SPECIFICATION

(45) Date of publication of the patent specification:
07.06.89

(51) Int. Cl.⁴: **G01S 7/52**, G01S 15/02, G10K 11/34

(21) Application number: 86118068.5

(22) Date of filing: 24.12.86

(54) Method of and apparatus for adjusting the intensity profile of an ultrasound beam.

(43) Date of publication of application:
29.06.88 Bulletin 88/26

(45) Publication of the grant of the patent:
07.06.89 Bulletin 89/23

(84) Designated Contracting States:
DE FR GB

(56) References cited:
EP-A- 0 032 513
EP-A- 0 104 928
WO-A-80/00497
DE-C- 907 753
GB-A- 2 041 522
US-A- 3 881 466
US-A- 4 179 683
US-A- 4 271 705

W.W. HARMAN: "Principles of the statistical theory of communication", pages 16-23, McGraw-Hill Book Co., Ltd.
ULTRASONICS, vol. 18, no. 1, January 1980, pages 38-42, IPC Business Press Ltd.; D. ASSENZA et al.: "Echographic imaging with dynamically focused insonification"

(73) Proprietor: Hewlett-Packard GmbH, Herrenberger Strasse 130 Postfach 14 30, D-7030 Böblingen(DE)

(72) Inventor: Reuschel, Jörg, Dipl.-Ing., Esseggerstrasse 65, D-7032 Sindelfingen(DE)
Inventor: Rudolph, Arno, Dipl.-Ing., Hohenzollernstrasse 26, D-7252 Weil der Stadt 5(DE)

(74) Representative: Schulte, Knud, Dipl.-Ing., c/o Hewlett-Packard GmbH Europ. Patent- und Lizenzabteilung Postfach 1430 Herrenberger Strasse 130, D-7030 Böblingen(DE)

## Description

The invention relates to a method for adjusting an intensity profile of an ultrasound beam in an ultrasound imaging apparatus according to the preamble of claim 1.

Such a method is utilized in ultrasound imaging to improve the horizontal resolution of the image derived from the received echo signals. In conventional ultrasound imaging systems, several piezoelectric crystals radiate ultrasound waves simultaneously into an object to be analyzed. In such devices, side lobes of the ultrasound beam cause degradation of the obtained image. In order to overcome the problems associated with side lobes, a technique called apodization can be employed, wherein the amplitudes of the ultrasound waves emitted by the boundary elements of a group of simultaneously activated piezoelectric elements are attentuated relative to the center elements of this group. In that way side lobes of the emitted ultrasound beam can be reduced so that the resolution of the ultrasound image is improved.

A known way to implement apodization in ultrasound imaging systems is to adjust the amplitudes of the electrical signals exciting the various piezoelectric elements of a transducer such that the boundary elements are excited with lower amplitude electrical signals. Such known systems comprise a plurality of attenuators for attenuating the electrical excitation signals according to the desired beam profile of the ultrasound beam. If the user of such an imaging system wants to change the beam profile of the ultrasound beam he would have to replace the various attenuators by new attenuators adapted to the desired new beam profile which is a tedious and time-consuming procedure.

Relative to the prior art, the invention as characterized in claim 1 solves the problem to provide a method for adjusting an intensity profile of an ultrasound beam in an ultrasound imaging systems which is simpler and more flexible.

According to an underlying principle of the invention, the resonance characteristics of the piezoelectric crystals are utilized to generate ultrasound waves of adjustable amplitude. In contrast to the prior art wherein the amplitudes of the electrical pulses exciting the piezoelectric elements are adjusted, in the method according to the invention the pulse durations of the excitation pulses are adjusted. The oscillation amplitude of an ultrasound wave emitted by a piezoelectric crystal typically is maximum if the crystal is excited at a frequency corresponding to the resonance frequency of the crystal. If the excitation frequency is varied, the amplitude of the ultrasound signals will become smaller corresponding to the resonance curve of the crystal. According to a feature of the invention, the excitation frequency is changed by adjusting the duration of the excitation pulses. This is due to the phenomenon that the frequency spectrum of the excitation pulses which can be derived, for example, by a Fourier analysis of the excitation signals is dependent on the duration of the excitation pulses.

If, for example, the pulse duration is shortened, the frequency spectrum has more components in the high frequency range. Since these high frequency components are strongly attenuated by the piezoelectric element, the resulting ultrasound wave has a smaller amplitude than an ultrasound wave excited by electrical pulses of greater duration. By appropriate adjustment of the durations of the excitation pulses for the individual piezoelectric elements of a group of such elements, a desired intensity profile of the resulting ultrasound beam can be composed.

An apparatus for performing the method according to the invention as claimed in claim 6 comprises a pulse width adjusting unit for adjusting the durations of the electrical impulses of the electrical excitation signals according to the desired intensity profile. Besides its flexibility in adjusting a desired ultrasound beam profile such an apparatus has the additional advantage that it permits all piezoelectric elements to be driven with the same excitation voltage thus keeping the circuit expenditure low.

According to claim 2, apodization of the ultrasound beam can be achieved.

According to claim 3, a focused ultrasound beam can be generated.

According to claim 4, the invention can be used in an ultrasound scanner wherein the group of activated piezoelectric elements is successively shifted by a predetermined amount of elements along an array of such elements for scanning an object under examination.

According to claim 5, the beam shape can be adjusted under control of, for example, a digital computer thus enabling easy change of the beam profile just by modifying the program controlling the width of the excitation pulses. Thus, every desired amplitude of the various excitation signals can be adjusted by external programming. This is particularly advantageous in the case that the emission characteristics of the piezoelectric elements differ from each other due to (manufacturing) tolerances. These differences can then be compensated by appropriate adjustment of the pulse width. Furthermore, the beam profile can easily be optimized for the particular application, for example the quality of the obtained image might be improved by adjusting the shape of the ultrasound beam to the depth range to be examined.

Subsequently, embodiments of the invention are explained with reference to the drawings.

Figure 1 shows an embodiment of the invention in the transmit channel of an ultrasound imaging apparatus.

Figure 2 shows a first embodiment of one channel of the pulse width adjusting unit of Figure 1.

Figures 3a through 3f are timing diagrams showing some of the signals occurring during operation of the circuit shown in Figure 2.

Figure 4 shows a second embodiment of one channel of the pulse width adjusting unit of Figure 1.

Figures 5a through 5f are timing diagrams showing some of the signals occurring during operation of the circuit shown in Figure 4.

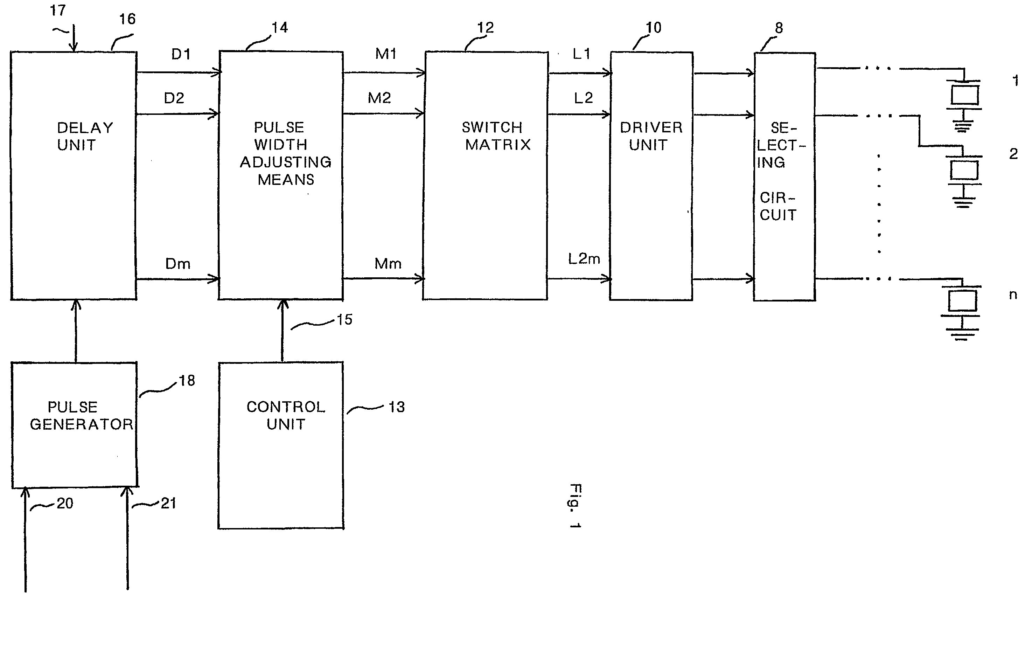

The ultrasound imaging apparatus according to Figure 1 comprises an array of n piezoelectric elements 1, 2, ... , n which can be placed on a body to be examined, for example on a patient. In the embodiment of Figure 1, the piezoelectric elements 1, 2, ... can be activated in groups of neighbouring elements each time during a transmit/receive period and in successive transmit/receive periods different groups are activated such as to scan the object under examination. For example, in a first transmit/receive period the elements 1 to 4 may be activated, in the following transmit/receive period the elements 2 to 5 may be activated, in the then following transmit/receive period the elements 3 to 6 may be activated, etc. until all elements of the array have been activated. Then, the scanning procedure starts again with the activation of elements 1 to 4.

In the following, the circuitry for activating the piezoelectric elements is schematically described. A pulse generator 18 receiving clock pulses on a line 21 delivers transmit pulses at its output in response to a trigger signal on a line 20. The pulse generator is triggered at the beginning of each of a plurality of successive transmit periods.

The output pulses of the pulse generator are supplied to a delay unit 16 for delaying the pulses and for producing a number m of output signals on m output lines D1,D2, ... Dm , the m output signals being delayed relative to each other. The output signals of the delay unit 16 are delayed relative to each other in such a way as to achieve a focusing of the ultrasound beam emitted by the group of transducer elements. For this purpose the signals for activating the boundary elements of a group of activated piezoelectric elements are delayed by a smaller time interval than the signals for activating the elements which are located closer to the center of the group such that all the ultrasound waves originating from an activated group amplify at a common focusing point. Due to the symmetry of the required delays for the piezoelectric elements in a group with respect to the center element of the group, the number of different delays corresponds to only half of the number of elements in a group. If, for example, the group of simultaneously activated piezoelectric elements consists of elements 1, 2, 3, and 4, the electrical signals for exciting the center elements 2 and 3 have to be delayed relative to the signals for exciting elements 1 and 4 according to the difference in propagation time of ultrasound waves from elements 1 or 4 and of elements 2 or 3 to the common focusing point. The delay times can be adjusted via line 17.

The m output lines D1,D2, ..., Dm of the delay unit 16 are connected to a pulse width adjusting unit 14 which adjusts the duration of the input pulses according to the desired beam profile. The information about the desired beam shape can be supplied from a control unit 13 to the pulse width adjusting unit 14 on line 15 in the form of various digital numbers specifying the individual pulse widths of the excitation signals required for the composition of the beam profile. Depending on the width of the pulses, the pulses have different frequency spectra so that different piezoelectric elements are finally excited with different frequencies resulting in different amplitudes of the ultrasound signals emitted by the piezoelectric elements. Details of the operation of the pulse width adjusting unit 14 will be explained below.

The m output lines M1,M2, ... , Mm of the pulse width adjusting unit 14 are connected to a switch matrix 12 of the type which is described in European patent application No. 85112072.5 (EP-A 0 215 972) having the title "Schaltmatrix". The function of the switch matrix is to establish appropriate connections between the m input lines M1, M2, ..., Mm and the 2m output lines L1,L2, ... ,L2m in order to achieve the desired focusing. New connections have to be made each time after a new group of piezoelectric elements has been activated. The 2m output signals of the switch matrix 12 are connected to a driver unit 10 comprising a number of 2m transmit drivers the outputs of which are connected via a selecting circuit 8 to the array of piezoelectric elements 1,2, ... ,n . The selecting circuit 8 comprises 2m inputs, n switching elements and n outputs, each output connected to one of the piezoelectric elements.

Subsequently, two embodiments of the pulse width adjusting unit 14 and their operation are explained in more detail.

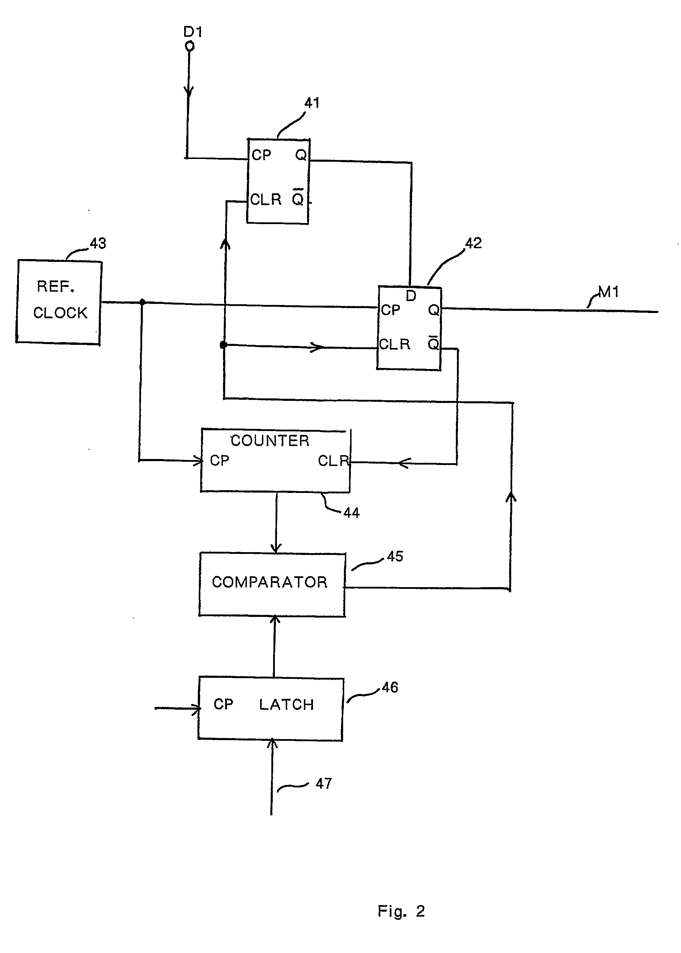

Figure 2 illustrates a first embodiment of a part of the pulse width adjusting unit 14 . The circuit shown in Figure 2 serves for adjusting the pulse width of one of the m input signals to unit 14 on lines D1,D2,...,Dm, respectively. The complete pulse width adjusting circuit would thus consist of a number m of the circuits shown in Figure 2. The input line D1 from delay unit 16 is connected to the clock input (CP) of a flipflop 41 and the Q output of flipflop 41 is connected to the D input of a second flipflop 42. The Q output of flipflop 42 is connected to line M1 which forms one of the m output lines of the pulse width adjusting unit 14. The clear inputs (CLR) of the flipflops 41 and 42 are connected to the output of a comparator 45 which compares the count of a binary counter 44 with a preselected number stored in a data latch 46. The data latch 46 receives the number to be stored via line 47 from the control unit 13 (Figure 1) which may comprise a microprocessor . A reference clock 43 is provided for delivering clock pulses to the clock inputs (CP) of the flipflop 42 and the counter 44. The reference clock 43 can also be used to supply the required clock pulses to the remaining circuits of the pulse width adjusting unit. The ♠ output of flipflop 42 is connected to the clear input (CLR) of counter 44.

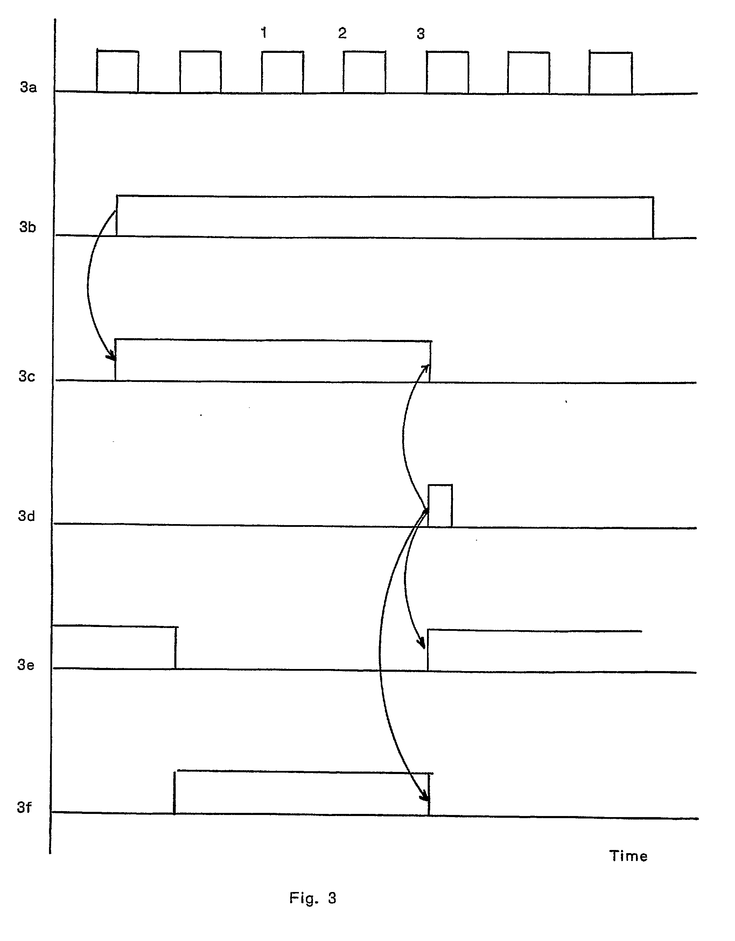

The operation of the circuit shown in Figure 2 is now explained with reference to the timing diagrams shown in Figure 3. Since digital circuitry is used in the embodiment of Figure 2, only two signal levels are of interest for the circuit operation which will be referred to as "low" and "high" . If a transition from low to high or from high to low of a signal causes a transition of another signal or signals this is illustrated by an arrow.

Figure 3a illustrates the clock pulses of the reference clock 43 which, for example, have a frequency of 75 MHz. Figure 3b shows an input pulse supplied to the pulse width adjusting unit on line D1. The Q output signal of flipflop 41, shown in Figure 3c, goes high in response to the rising edge of the input pulse. The Q output signal of flipflop 42, i.e. the output signal on line M1 of the pulse width adjusting circuit shown in Figure 2, goes high in response to the rising edge of the first clock pulse after the occurrence of the rising edge of the Q output signal of flipflop 41. Correspondingly, the ⬤ output signal of flipflop 42 goes low. As soon as the comparator 45 has detected that the accumulated count of counter 44 is equal to the value stored in data latch 46, a short pulse is generated, shown in Figure 3d, which resets flipflops 41 and 42. In the example shown, it is assumed that the value stored in data latch 46 is three so that the comparator output signal (Figure 3d) occurs after three clock pulses have been counted by counter 44. When the flipflops 41 and 42 are reset, the output signal of the pulse width adjusting circuit goes low, thus terminating the output signal of the pulse width adjusting circuit. Depending on the value stored in data latch 46, the duration of the output pulse on line M1 can be adjusted. The output signal of the comparator 45 also causes the inverted output signal of flipflop 42 to go high so that the counter is reset for a new counting cycle.

Subsequently, a new input pulse transmitted via line D1 is supplied to flipflop 41 and the cycle described above starts again. The duration of the output pulse of the pulse width adjusting circuit depends on the data value stored in data latch 46. This data value can be changed by corresponding input data from control unit 13. Thus, the pulse duration can be varied in steps, whereby the width of these steps is determined by the frequency of the clock pulses supplied by reference clock 43. If the clock frequency is 75 MHz as in the present example the duration of the output pulses can be adjusted in steps of 13.33 nanoseconds. If finer steps are desired, the clock frequency would have to be increased correspondingly. Since the durations of the output pulses of each of the m channels of the pulse width adjusting circuit can be adjusted individually by storing appropriate data values in each of the data latches, a desired aperture function can be adjusted. It is understood that in the embodiment shown in Figure 2 the counter 44, the comparator 45 and the data latch 46 could be replaced by a preset-counter.

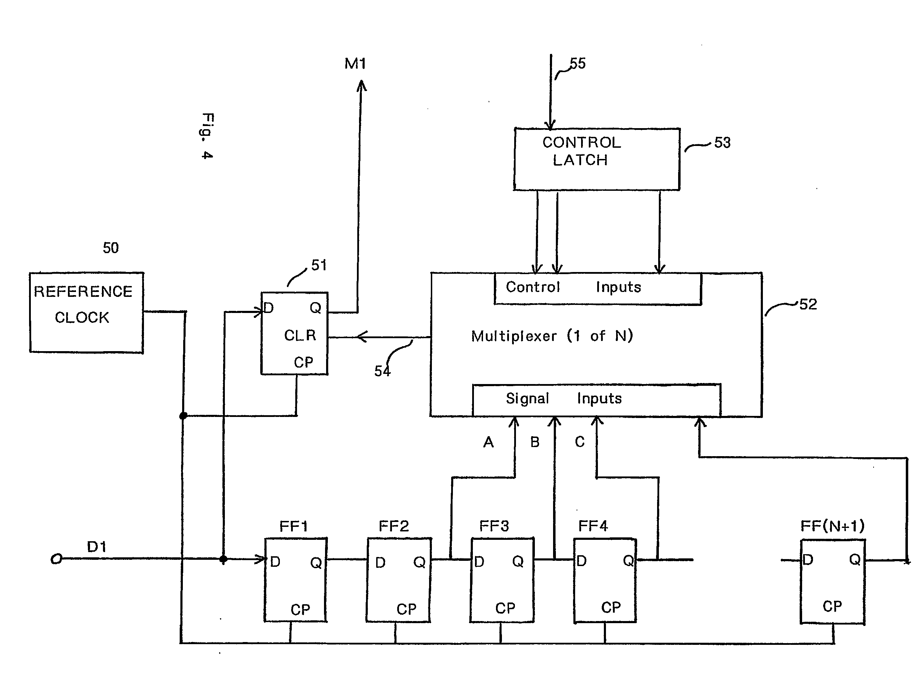

In the following, an alternative embodiment of the pulse width adjusting circuit is explained with reference to Figure 4. The input signal from delay unit 16 on line D1 is supplied to the D input of a flipflop 51 and to the D input of a flipflop FF1. The Q output of flipflop 51 is connected to line M1 which forms the output of the pulse width adjusting circuit. The flipflops FF2, FF3, FF4, ..., FF(N+1) form a digital delay line: The Q outputs of each flipflop of this delay line is connected to the D input of the next flipflop in the delay line, respectively. Each of the Q outputs is connected via lines A, B, C, ... to a 1 of N multiplexer 52. The number of flipflops in this digital delay line is therefore equal to N, whereby N is preferably smaller than $2^m$. The multiplexer 52 connects one of its N inputs A,B,C, ... to its output 54 in response to the control data supplied to the control inputs of the multiplexer from a control latch 53. The output 54 of the multiplexer 52 is connected to the reset input CLR of flipflop 51. The input data to the control latch are supplied from control unit 13 on line 55. The output of a reference clock 50 is connected to the clock inputs of flipflop 51 and of flipflops FF1, FF2, ..., FF(N+1).

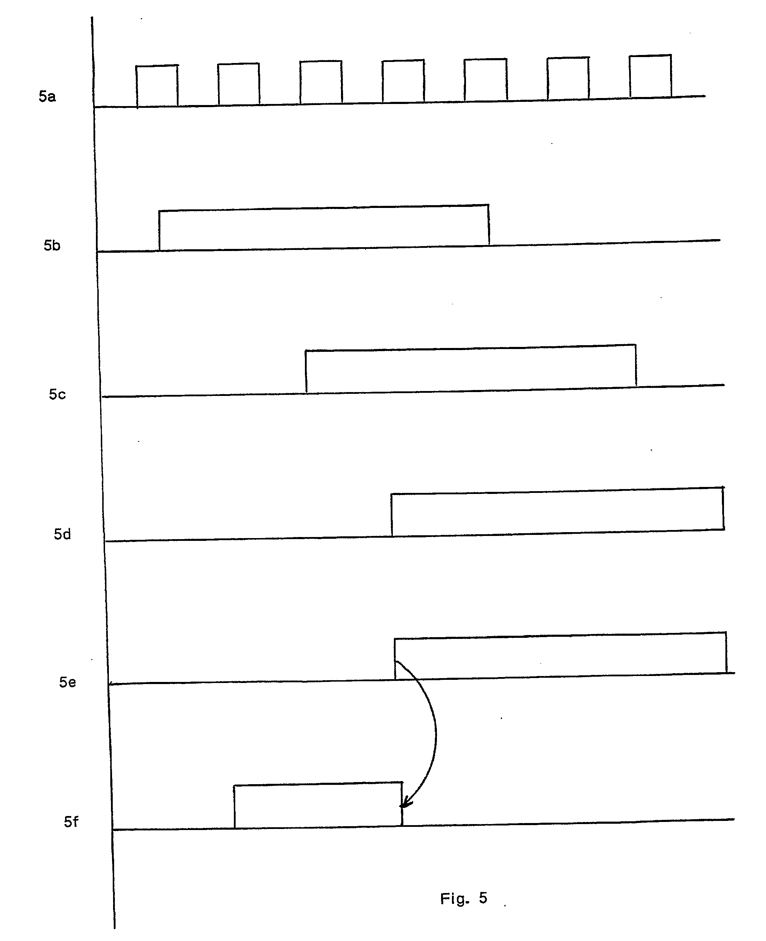

The operation of the circuit shown in Figure 4 will now be described with reference to the timing diagrams of Figure 5. Figure 5a shows the clock pulses occurring with a frequency of, for example, 75 MHz. The input pulse on line D1 is shown in Figure 5b. Figures 5c and 5d show the Q output signals of flipflops FF2 and FF3 on lines A and B, respectively. It can be seen that the rising edges of the signals on lines A and B are delayed relative to each other by one clock cycle. The output pulse on line M1 is shown in Figure 5f. The rising edge of the output pulse occurs at the occurrence of the first clock pulse after the rising edge of the input pulse in Fig. 5b. In the present example, it is assumed that the multiplexer 52 is controlled such that the signal on line B, i.e. the signal from the Q output of flipflop FF3, is connected to the output 54 of the multiplexer. With this assumption, the output signal of the multiplexer has the shape shown in Figure 5e. The leading edge of the output signal of the multiplexer is delayed relative to the leading edge of the input pulse on line D1 according to the delay generated by the digital delay line of flipflops.

The leading edge of the output signal of the multiplexer causes the flipflop 51 to be reset so that the signal at the Q output of flipflop 51 goes low thus terminating the output pulse (Fig. 5f). In the example just described it was assumed that the multiplexer connects the input signal B to its output. If the multiplexer is controlled such that a different signal, e.g. signal C , is connected to the output of the multiplexer, the rising edge of output signal of the multiplexer would occur at a later point in time resulting in an output pulse on line M1 having a greater duration than that shown in Fig. 5f.

As already mentioned above, a pulse width adjusting unit comprises a number m of the circuits described with reference to Figures 2 and 4 , m being the number of lines originating from the delay unit 16. Consequently, the data latch 46 (Fig. 2) or the control latch 53 (Fig.4) have to be provided m times.

In the embodiments explained with reference to Figures 2 and 4, the input pulses of the pulse width adjusting circuit are shortened near the trailing edges of the pulse, but this is not a necessary feature of the invention. The pulses could also be shortened near the leading edge as well as near the trailing edge, or only near the leading edge. The output pulses could even have a greater duration than the input pulses. It is only essential that the pulse width adjusting unit permits the adjustment of the duration of the pulses for activating the piezoelectric elements according to the desired ultrasound beam profile. If the ultrasound beam is to be focused and the excitation impulses of the piezoelectric elements therefore have to be delayed relative to each other (measured between the centres of the pulses), it has to be taken into account that the adjustment of the pulse durations in the pulse width adjusting unit might influence the relative delays of the impulses, in particular if the input pulses of the adjusting unit are shortened or prolonged only at a single edge (assuming that the delays are measured relative to the centres of the pulses). This potential shift in the relative delays can be compensated by appropriate adjustment of the delays in the delay unit.

The pulse width of the electrical excitation signals required for generating an ultrasound wave of a specific amplitude can be determined from the transfer function of the piezoelectric elements. The transfer function $F(j\omega)$ is defined by the relationship (in complex notation, as a function of frequency):

$$U_A (j\omega) = U_\tau(j\omega) \cdot F(j\omega),$$

wherein $U_A$ represents the ultrasound wave emitted by the piezoelectric element, $U_\tau$ represents the electrical signal having a duration $\tau$ exciting the piezoelectric element, $\omega$ represents the signal frequency, and $j$ is the imaginary unit. The quantity $U_\tau$ represents the electrical excitation impulses of duration $\tau$ in the frequency domain and could be derived from the time function of the exciting pulse by a Fourier transformation.

The transfer function can be determined experimentally by successively exciting the crystals with various frequencies and measuring the ultrasound amplitude for each frequency, respectively. As an alternative, the crystals might be excited with electrical signals of different durations and the resulting ultrasound amplitudes be measured, respectively. In both cases, the measurements can be performed for each individual piezoelectric element so that potential manufacturing tolerances can be compensated for. If such tolerances are negligible, it is sufficient to measure only one element.

The transfer function could also be calculated by known per se mathematical procedures from the equivalent circuit of the piezoelectric crystal.

To give a practical example, for a piezoelectric element with a resonance frequency at 3,5 MHz, the maximum amplitude of the ultrasound waves is obtained if the pulse duration of the electrical excitation impulses is approximately 140 nanoseconds.

In the above explained embodiments of the invention the corresponding imaging apparatus operates as an ultrasound scanner wherein the group of simultaneously activated piezoelectric elements is shifted along the array of elements in successive transmit /receive periods and wherein a delay unit is provided to achieve focusing of the resulting ultrasound beam. It is understood, however, that the invention is not limited to such devices, but can be used for all ultrasound imaging devices wherein several electroacoustical elements are activated at a time. It is also understood that the invention is not limited to linear arrays but can also be used for annular arrays or phased arrays.

**Claims**

1. A method of adjusting the intensity profile of an ultrasound beam in an ultrasound imaging apparatus wherein
- the ultrasound beam is formed by superimposing ultrasound waves emitted by each of a group of piezoelectric elements,
- the piezoelectric elements are excited by electrical pulses to emit ultrasound waves, each of said elements being excited by a different one of said pulses,
**characterized** in that
for generating ultrasound waves having such amplitudes that a desired intensity profile of the ultrasound beam results, the durations of the electrical pulses for exciting the piezoelectric elements are adjusted individually for each element in such a way as to achieve the required amplitudes of the ultrasound waves.

2. A method as in claim 1, **characterized** in that for achieving apodization of the ultrasound beam the piezoelectric elements at the periphery of the group of elements are activated with electrical pulses having such durations that the resulting ultrasound waves have smaller amplitudes than the ultrasound waves from the center of the group.

3. A method as in any of the preceding claims, **characterized** in that for producing a focused ultrasound beam the electrical pulses for activating the piezoelectric crystals are delayed relative to each other.

4. A method as in any of the preceding claims, **characterized** in that for scanning an object under examination by an ultrasound beam the group of activated piezoelectric elements is shifted in steps across an array of piezoelectric elements, each step corresponding to a new transmit/receive period of the ultrasound beam.

5. A method as in any of the preceding claims, **characterized** in that the durations of the electrical pulses for activating the piezoelectric elements are digitally adjustable.

6. An ultrasound imaging apparatus comprising circuitry (8, 10, 12–18) arranged to cause each of a group of piezoelectric elements (1–n) to emit ultrasound waves, the ultrasound waves emitted by the elements in the group being superimposed so as to form an ultrasound beam, said circuitry including a pulse generator (18) arranged to supply to each element of said group an electrical excitation pulse, **characterized** in that for adjusting the intensity profile of the ultrasound beam said circuitry further includes a pulse width adjusting unit (14) for individually adjusting the durations of the excitation pulses giving rise to said beam in such a way that the ultrasound waves emitted by the elements of said group have amplitudes resulting in the desired intensity profile.

7. An apparatus as in claim 6, **characterized** in that said circuitry further comprises a delay unit (16) for delaying the electrical pulses from the pulse generator (18) relative to each other before supplying these pulses to the pulse width adjusting unit (14).

8. An apparatus as in claim 6 or 7, **characterized** in that the pulse width adjusting unit (14) is digitally adjustable.

## Patentansprüche

1. Verfahren zur Einstellung des Intensitätsprofils eines Ultraschall-Strahls in einem Ultraschall-Abbildgerät, bei dem
   - der Ultraschall-Strahl durch Überlagerung der von jeweils einer Gruppe piezoelektrischer Elemente ausgesandten Ultraschall-Wellen gebildet wird,
   - die piezoelektrischen Elemente durch elektrische Pulse zur Aussendung von Ultraschall-Wellen angeregt werden, wobei jedes der Elemente von einem anderen Puls angeregt wird,

   dadurch gekennzeichnet, daß zur Erzeugung von Ultraschall-Wellen mit Amplituden, die das gewünschte Intensitätsprofil des Ultraschall-Strahls ergeben, die jeweilige Dauer der elektrischen Pulse zur Erregung der piezoelektrischen Elemente jeweils einzeln für die Elemente so eingestellt wird, daß die erforderlichen Amplituden der Ultraschall-Wellen erhalten werden.

2. Verfahren nach Anspruch 1, dadurch gekennzeichnet, daß zum Erreichen einer Apodisierung des Ultraschall-Strahls die piezoelektrischen Elemente am äußeren Rand der Gruppe von Elementen mit elektrischen Pulsen einer solchen Dauer angeregt werden, daß die erzeugten Ultraschall-Wellen kleinere Amplituden als die aus der Mitte der Gruppe stammenden Ultraschall-Wellen aufweisen.

3. Verfahren nach einem der vorhergehenden Ansprüche, dadurch gekennzeichnet, daß zur Erzeugung eines fokussierten Ultraschall-Strahls die elektrischen Pulse zur Anregung der piezoelektrischen Kristalle zueinander verzögert werden.

4. Verfahren nach einem der vorhergehenden Ansprüche, dadurch gekennzeichnet, daß zum Abtasten eines zu untersuchenden Objektes durch einen Ultraschall-Strahl innerhalb einer Anordnung von piezoelektrischen Elementen schrittweise versetzte Gruppen der piezoelektrischen Elemente angeregt werden, wobei jeder dieser Schritte einer neuen Sende-/Empfangs-Periode des Ultraschall-Strahls entspricht.

5. Verfahren nach einem der vorhergehenden Ansprüche, dadurch gekennzeichnet, daß die jeweilige Dauer der zur Anregung der piezoelektrischen Elemente dienenden elektrischen Pulse digital einstellbar ist.

6. Ultraschall-Abbildegerät mit einer Schaltungsanordnung (8, 10, 12–18), durch die jeweils eine Gruppe piezoelektrischer Elemente (1–n) zum Aussenden von Ultraschall-Wellen veranlaßt werden kann, wobei die von den Elementen in der Gruppe ausgesandten Ultraschall-Wellen überlagert werden zur Bildung eines Ultraschall-Strahles, und wobei die Schaltungsanordnung einen Pulsgenerator (18) umfaßt, der den Elementen der Gruppe jeweils einen elektrischen Anrdgungspuls liefert, dadurch gekennzeichnet, daß die Schaltungsanordnung zur Einstellung des Intensitätsprofils des Ultraschall-Strahls ferner eine Pulsbreiten-Einstelleinheit (14) zur Einstellung der jeweiligen Dauer der zu dem Ultraschall-Strahl führenden Anregungspulse besitzt, derart, daß die von den Elementen der Gruppe ausgesandten Ultraschall-Wellen Amplituden aufweisen, die das gewünschte Intensitätsprofil ergeben.

7. Abbildegerät nach Anspruch 6, dadurch gekennzeichnet, daß die Schaltungsanordnung ferner ein Verzögerungsglied (16) umfaßt, das die vom Pulsgenerator (18) kommenden elektrischen Pulse vor ihrer Weiterleitung zur Pulsbreiten-Einstelleinheit (14) relativ zueinander verzögert.

8. Abbildegerät nach Anspruch 6 oder 7, dadurch gekennzeichnet, daß die Pulsbreiten-Einstelleinheit (14) digital einstellbar ist.

## Revendications

1. Un procédé d'ajustement du profil d'intensité d'un faisceau d'ultrasons dans un dispositif imageur à ultrasons, dans lequel:
   - le faisceau d'ultrasons est formé en superposant des ondes ultrasonores émises par chaque élément d'un groupe d'éléments piézoélectriques,
   - les éléments piézoélectriques, pour émettre les ondes ultrasonores, sont excités par des impulsions électriques, chacun de ces éléments étant excité par une impulsion différente de ces impulsions,

   caractérisé en ce que: pour produire des ondes ultrasonores ayant des amplitudes telles que l'on obtienne pour le faisceau d'ultrasons un profil d'intensité voulu, on ajuste individuellement, pour chaque élément, la durée des impulsions électriques d'excitation des éléments piézoélectriques, de manière à obtenir les amplitudes voulues des ondes ultrasonores.

2. Le procédé de la revendication 1, caractérisé en ce que, pour obtenir l'apodisation du faisceau ultrasonore, on active les éléments piézoélectriques te trouvant à la périphérie du groupe d'éléments par des impulsions électriques ayant des durées telles que les ondes ultrasonores résultantes aient des amplitudes plus faibles que celles des ondes ultrasonores provenant du centre du groupe.

3. Le procédé de l'une des revendications précédentes, caractérisé en ce que, pour produire un faisceau d'ultrasons focalisé, on retarde les unes par rapport aux autres les impulsions électriques d'activation des cristaux piézoélectriques.

4. Le procédé de l'une des revendications précédentes, caractérisé en ce que, pour balayer un objet à l'examen par un faisceau d'ultrasons, on décale par pas successifs, sur l'étendue d'un réseau d'éléments piézoélectriques, le groupe d'éléments piézoélectriques activés, chaque pas correspondant à une nouvelle période d'émission/réception du faisceau d'ultrasons.

5. Le procédé de l'une des revendications précédentes, caractérisé en ce que les durées des impulsions électriques d'activation des éléments piézoélectriques sont réglables numériquement.

6. Un dispositif imageur par ultrasons comportant des circuits (8, 10, 12 à 18) configurés de manière que chaque élément d'un groupe d'éléments piézoélectriques (1 à n) émette des ondes ultrasonores, les ondes ultrasonores émises par les éléments du groupe étant superposées de manière à former un faisceau ultrasonore, ces circuits comprenant un générateur d'impulsions (18) configuré de manière à délivrer à chaque élément du groupe une impulsion d'excitation, caractérisé en ce que, pour ajuster le profil d'intensité du faisceau d'ultrasons, ces circuits comportent en outre un bloc d'ajustement de largeur d'impulsion (14) pour ajuster individuellement les durées des impulsions d'excitation permettant de constituer le faisceau, de telle manière que les ondes ultrasonores émises par les éléments dudit groupe ait des amplitudes qui permettent d'obtenir le profil d'intensité voulu.

7. Le dispositif de la revendication 6, caractérisé en ce que les circuits comportent en outre un bloc retardateur (16) pour retarder les unes par rapport aux autres les impulsions électriques en provenance du générateur d'impulsions (18) avant de délivrer ces impulsions au bloc d'ajustement de largeur d'impulsion (14).

8. Le dispositif de la revendication 6 ou 7, caractérisé en ce que le bloc d'ajustement de largeur d'impulsion (14) est réglable numériquement.

Fig. 1

Fig. 2

Fig. 3

Fig. 4

5a

5b

5c

5d

5e

5f

Fig. 5